# DEMANDE DE BREVET EUROPEEN

(11) **EP 4 776 088 A1**
(43) Date de publication de la demande: **15.07.2026**
(21) Numéro de dépôt: 26151196.8
(22) Date de dépôt: 09.01.2026
(51) Int. Cl.: G05B 23/02

(54) **PROCEDE ET SYSTEME DE SURVEILLANCE DE LA PERFORMANCE D'UNE PAIRE D ACCUMULATEURS HYDRAULIQUES D'UN AERONEF**

(30) Priorité: 14.01.2025 FR 2500351
(71) Demandeur: Airbus Canada Limited Partnership, Mirabel, QC J7N 3C6 (CA)
(72) Inventeur: MARTIN ESTRANA, Veronica, 31300 TOULOUSE (FR)
(74) Mandataire: Gabriel, Franck

(57) **Abrégé**

Un procédé de surveillance de la performance d'une paire d'accumulateurs hydrauliques d'un aéronef comporte : collecter (401) des valeurs de pression des accumulateurs pendant chacun de N vols de l'aéronef, avec N ≥ 2 ; pour chacun des N vols, calculer (403) une valeur moyenne de pression pour chacun des accumulateurs ; pour chacun des accumulateurs, calculer (404) une moyenne des N valeurs moyennes de pression préalablement calculées ; calculer (405) un paramètre P qui est la valeur absolue d'une différence entre les deux moyennes ; calculer (408) un indicateur de fuite fonction d'une différence entre le paramètre P et une valeur de référence déterminée ; et déclencher (410) une alerte si l'indicateur est supérieur à un premier seuil prédéterminé, et ne pas déclencher (411) une alerte sinon. Ainsi, une surveillance fiable et simple à mettre en œuvre est effectuée, permettant de lever des alertes de maintenance suffisamment à l'avance.

## Description

### DOMAINE TECHNIQUE

Le domaine de l'invention est celui de la surveillance de l'état de santé (« Health Monitoring » en anglais) et de la maintenance des aéronefs.

Plus précisément, la présente invention concerne un procédé de surveillance de la performance d'une paire d'accumulateurs hydrauliques qui est comprise dans un système hydraulique d'un aéronef et qui est configurée pour fournir temporairement une puissance hydraulique dans une situation d'urgence.

La présente invention concerne également : un système de surveillance adapté à la mise en œuvre d'un tel procédé de surveillance ; un produit programme d'ordinateur et un support de stockage permettant la mise en œuvre d'un tel procédé de surveillance ; et un procédé de maintenance s'appuyant sur un tel procédé de surveillance.

### ETAT DE LA TECHNIQUE ANTERIEURE

Les aéronefs sont soumis à des conditions extrêmes lorsqu'ils naviguent dans les airs, notamment en termes de variations de température, de pression et de vitesse. Les performances de leurs composants doivent être régulièrement vérifiées afin d'assurer leur bon fonctionnement.

La maintenance préventive ou prédictive consiste à effectuer des contrôles et des réparations avant qu'une panne ne se manifeste.

Dans le domaine de l'aéronautique, la maintenance permet notamment d'améliorer la disponibilité et la performance d'un aéronef en évitant son immobilisation au sol (AOG, pour « Aircraft On Ground » en anglais), et de réduire les coûts de maintenance en permettant d'identifier à l'avance des opérations de maintenance en fonction des performances réelles de l'aéronef.

La surveillance de l'état de santé de l'aéronef à des fins de maintenance comprend une collecte des données techniques dès la mise sous tension de l'aéronef, puis pendant le vol et jusqu'à son arrêt. Les données ainsi collectées sont notamment utilisées pour calculer les différents indicateurs sur lesquels s'appuie la maintenance, et donc la programmation d'opérations de maintenance.

L'utilisation des données peut avoir lieu pendant le vol (on parle alors de surveillance de la santé au cours du vol, ou « In-flight health monitoring » en anglais) et/ou après le vol (par exemple si le volume de données à traiter nécessite des ressources de calcul plus élevées). Les calculs utilisant les données collectées peuvent donc être effectués dans l'aéronef et/ou dans un ou plusieurs équipements au sol. Dans le second cas, les équipements (calculateurs) au sol reçoivent, en temps réel ou en différé, les données collectées dans l'aéronef.

L'observation de l'état de santé d'un aéronef sur plusieurs vols permet au personnel au sol de prendre des décisions et de planifier les opérations de maintenance à l'avance, ce qui permet de gagner de précieux temps d'exécution. Le personnel au sol peut ainsi prendre des décisions appropriées en fonction de la criticité, de la logistique et des contrôles de maintenance à venir, et préparer à l'avance les réparations et les remplacements.

Dans le cadre de cette maintenance, il existe en particulier un besoin d'effectuer une surveillance de la performance d'une paire d'accumulateurs hydrauliques qui est comprise dans un système hydraulique d'un aéronef et qui est configurée pour fournir temporairement une puissance hydraulique dans une situation d'urgence. Pour cela, il convient de disposer d'une solution qui soit fiable et simple à mettre en œuvre, et qui permette d'anticiper d'éventuelles interruptions de fonctionnement (« Operational Interruptions ») en levant des alertes de maintenance (par exemple en cas de fuite sur un des accumulateurs hydrauliques de la paire surveillée) suffisamment à l'avance.

### EXPOSE DE L'INVENTION

Il est proposé un procédé de surveillance d'une performance d'une paire d'accumulateurs hydrauliques comprise dans un système hydraulique d'un aéronef, la paire d'accumulateurs hydrauliques comprenant des premier et deuxième accumulateurs hydrauliques configurés pour fournir temporairement une puissance hydraulique dans une situation d'urgence, le procédé étant implémenté par un système de surveillance comprenant une circuiterie électronique, le procédé comportant :
- collecter des valeurs de pression des premier et deuxième accumulateurs hydrauliques pendant chacun de N vols de l'aéronef, avec N ≥ 2, les valeurs de pression étant fournies par des capteurs de pression dont est équipé l'aéronef ;
- pour chacun des N vols, calculer une valeur moyenne de pression pour chacun des premier et deuxième accumulateurs hydrauliques, en fonction de valeurs de pression contenues dans un intervalle de temps déterminé du vol ;
- pour chacun des premier et deuxième accumulateurs hydrauliques, calculer une moyenne, notée M1 pour le premier accumulateur hydraulique et M2 pour le deuxième accumulateur hydraulique, des N valeurs moyennes de pression calculées pour les N vols ;
- calculer un paramètre P qui est la valeur absolue d'une différence entre les moyennes M1 et M2 calculées pour les premier et deuxième accumulateurs hydrauliques ;
- calculer un indicateur de fuite qui est fonction d'une différence entre le paramètre P et une valeur de référence déterminée ; et
- déclencher une alerte si l'indicateur de fuite est supérieur à un premier seuil prédéterminé, et ne pas déclencher une alerte si l'indicateur de fuite est inférieur ou égal au premier seuil prédéterminé.

Ainsi, il est possible d'effectuer une surveillance de la performance d'une paire d'accumulateurs hydrauliques comprise dans un système hydraulique d'un aéronef, grâce à une solution qui est fiable et simple à mettre en œuvre, et qui permet d'anticiper d'éventuelles interruptions de fonctionnement en levant des alertes de maintenance suffisamment à l'avance.

Selon un mode de réalisation particulier, le procédé comprend, pour chacun des N vols : déterminer l'intervalle de temps comme étant compris dans une phase finale du vol et comme contenant des valeurs de pression qui respectent un jeu de critères définissant un caractère constant de la pression des premier et deuxième accumulateurs hydrauliques.

Selon un mode de réalisation particulier, pour chacun des N vols, la valeur moyenne de pression calculée pour chacun des premier et deuxième accumulateurs hydrauliques est une moyenne d'une valeur de pression maximale et d'une valeur de pression minimale parmi les valeurs de pression contenues dans l'intervalle de temps déterminé du vol.

Selon un mode de réalisation particulier, la valeur de référence est déterminée comme le paramètre P calculé pour le premier vol qui suit une observation d'une révision d'au moins un des premier et deuxième accumulateurs hydrauliques.

Selon un mode de réalisation particulier, une révision d'un accumulateur hydraulique donné, parmi les premier et deuxième accumulateurs hydrauliques, est observée si les trois conditions suivantes sont vérifiées :
- la valeur absolue d'une différence entre une valeur moyenne de pression pour l'accumulateur hydraulique donné pendant un vol de rang F et une valeur moyenne de pression pour l'accumulateur hydraulique donné pendant un vol de rang F-2 est supérieure à un deuxième seuil prédéterminé ;
- la valeur absolue d'une différence entre la valeur moyenne de pression pour l'accumulateur hydraulique donné pendant le vol de rang F et une valeur moyenne de pression pour l'accumulateur hydraulique donné pendant un vol de rang F-1 est supérieure à un troisième seuil prédéterminé lui-même supérieur au deuxième seuil prédéterminé ; et
- la valeur absolue d'une différence entre la valeur moyenne de pression pour l'accumulateur hydraulique donné pendant le vol de rang F et une valeur moyenne de pression pour l'accumulateur hydraulique donné pendant un vol de rang F+1 est inférieure au troisième seuil prédéterminé.

Selon un mode de réalisation particulier, le déclenchement d'une alerte comprend :
- déclencher une première alerte indiquant une fuite du premier accumulateur hydraulique si l'indicateur de fuite est supérieur au premier seuil prédéterminé et si la moyenne M1 calculée pour le premier accumulateur hydraulique est inférieure à la moyenne M2 calculée pour le deuxième accumulateur hydraulique ; et
- déclencher une deuxième alerte indiquant une fuite du deuxième accumulateur hydraulique si l'indicateur de fuite est supérieur au premier seuil prédéterminé et si la moyenne M1 calculée pour le premier accumulateur hydraulique est supérieure à la moyenne M2 calculée pour le deuxième accumulateur hydraulique.

Selon un mode de réalisation particulier, au moins deux itérations de la collecte, des calculs et du déclenchement ou du non-déclenchement d'une alerte sont effectuées, chaque itération étant effectuée en utilisant une composition particulière d'une fenêtre glissante de N vols.

Selon un mode de réalisation particulier, le système hydraulique comprend une pompe principale, une pompe de réserve et une troisième pompe reliée à une turbine de secours, et dans lequel la situation d'urgence est une situation dans laquelle la pompe principale et la pompe de réserve sont non opérationnelles et la troisième pompe reliée à la turbine de secours n'est pas encore totalement opérationnelle.

Il est aussi proposé un produit programme d'ordinateur, comportant des instructions entraînant l'exécution, par un processeur, du procédé de surveillance évoqué ci-dessus selon l'un quelconque de ses modes de réalisation, lorsque lesdites instructions sont exécutées par le processeur.

Il est aussi proposé un support de stockage, stockant de telles instructions.

Il est aussi proposé un système de surveillance d'une performance d'une paire d'accumulateurs hydrauliques comprise dans un système hydraulique d'un aéronef, la paire d'accumulateurs hydrauliques comprenant des premier et deuxième accumulateurs hydrauliques configurés pour fournir temporairement une puissance hydraulique dans une situation d'urgence, le système de surveillance comprenant une circuiterie électronique configurée pour implémenter :
- collecter des valeurs de pression des premier et deuxième accumulateurs hydrauliques pendant chacun de N vols de l'aéronef, avec N ≥ 2, les valeurs de pression étant fournies par des capteurs de pression dont est équipé l'aéronef ;
- pour chacun des N vols, calculer une valeur moyenne de pression pour chacun des premier et deuxième accumulateurs hydrauliques, en fonction de valeurs de pression contenues dans un intervalle de temps déterminé du vol ;
- pour chacun des premier et deuxième accumulateurs hydrauliques, calculer une moyenne, notée M1 pour le premier accumulateur hydraulique et M2 pour le deuxième accumulateur hydraulique, des N valeurs moyennes de pression calculées pour les N vols ;
- calculer un paramètre P qui est la valeur absolue d'une différence entre les moyennes M1 et M2 calculées pour les premier et deuxième accumulateurs hydrauliques ;
- calculer un indicateur de fuite qui est fonction d'une différence entre le paramètre P et une valeur de référence déterminée ; et
- déclencher une alerte si l'indicateur de fuite est supérieur à un premier seuil prédéterminé, et ne pas déclencher une alerte si l'indicateur de fuite est inférieur ou égal au premier seuil prédéterminé.

Il est aussi proposé un procédé de maintenance d'une paire d'accumulateurs hydrauliques comprise dans un système hydraulique d'un aéronef, la paire d'accumulateurs hydrauliques comprenant des premier et deuxième accumulateurs hydrauliques configurés pour fournir temporairement une puissance hydraulique dans une situation d'urgence, le procédé de maintenance comportant :
- exécuter le procédé de surveillance évoqué ci-dessus selon l'un quelconque de ses modes de réalisation, pour surveiller la performance de la paire d'accumulateurs hydrauliques ; et
- en cas de déclenchement d'une alerte relative à la performance de la paire d'accumulateurs hydrauliques, réaliser au moins une opération de maintenance sur au moins un des accumulateurs hydrauliques de la paire d'accumulateurs hydrauliques.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de surveillance de la performance d'une paire d'accumulateurs hydrauliques d'un système hydraulique de l'aéronef ;
[Fig. 2] illustre schématiquement le système hydraulique de l'aéronef de la Fig. 1, dans un mode de réalisation ;
[Fig. 3] illustre schématiquement un exemple d'architecture matérielle du système de surveillance de la Fig. 1 ;
[Fig. 4] illustre schématiquement un exemple d'algorithme de surveillance exécuté par le système de surveillance de la Fig. 1 ; et
[Fig. 5] illustre schématiquement un exemple d'algorithme de maintenance d'une paire d'accumulateurs hydrauliques d'un système hydraulique d'un aéronef.

### EXPOSE DETAILLE DE MODES DE REALISATION

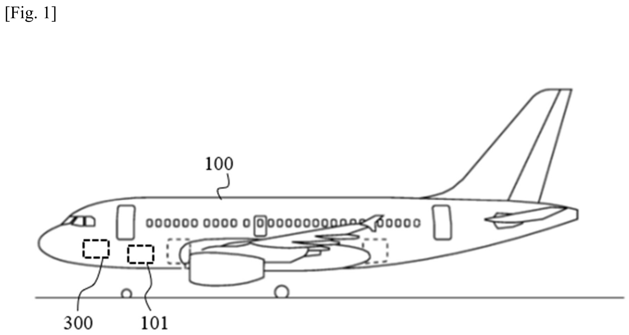

La Fig. 1 illustre schématiquement, en vue de côté, un aéronef 100 équipé d'un système 300 de surveillance de la performance d'une paire d'accumulateurs hydrauliques qui est comprise dans un système hydraulique 101 et qui est configurée pour fournir temporairement une puissance hydraulique dans une situation d'urgence.

Comme détaillé par la suite, le système de surveillance 300 permet de déclencher une alerte (par l'exemple l'affichage d'une information et/ou l'envoi d'un message à un service de maintenance) si une condition de déclenchement est vérifiée. En outre, comme également détaillé par la suite, le déclenchement d'une alerte relative à la paire d'accumulateurs hydrauliques peut être suivi d'au moins une opération de maintenance sur cette paire d'accumulateurs hydrauliques (par exemple la réparation ou le remplacement de l'un des accumulateurs hydrauliques de la paire surveillée).

Dans une implémentation particulière, le système de surveillance 300 est un équipement électronique embarqué. Par exemple, il fait partie d'une circuiterie électronique de l'avionique de l'aéronef 100. Préférentiellement, il est intégré à un calculateur de l'aéronef 100.

Dans une variante, le système de surveillance 300 n'est pas embarqué dans l'aéronef 100 mais est présent au sol.

Dans une autre variante, le système de surveillance 300 comprend une première partie qui est embarquée dans l'aéronef 100 et une deuxième partie qui est présente au sol. Ainsi, les calculs et le déclenchement des alertes peuvent être répartis entre les deux parties du système de surveillance 300.

Dans une autre variante, au moins un système de surveillance 300 est embarqué dans l'aéronef et au moins un système de surveillance est installé au sol.

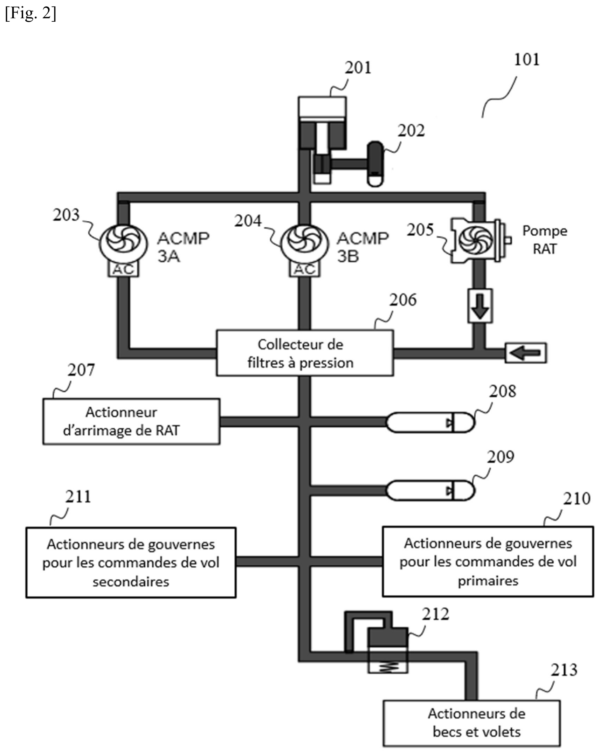

Dans le mode de réalisation particulier illustré schématiquement sur la Fig. 2, le système hydraulique 101 est un système hydraulique particulier appelé « système hydraulique n° 3 ». On rappelle qu'un aéronef comprend généralement plusieurs systèmes hydrauliques indépendants utilisés pour actionner la quasi-totalité des éléments mobiles nécessaires au vol, tels que le train d'atterrissage, les freins, les volets, les réducteurs de portance (spoilers), les gouvernes de vol, etc. Chaque système hydraulique possède son propre réservoir, contenant un fluide hydraulique sous pression utilisé pour transmettre la puissance et la force d'un point à un autre. Pour respecter les normes de certification visant à minimiser les conséquences d'une panne, un aéronef dispose typiquement de trois systèmes hydrauliques, appelés systèmes hydrauliques n° 1, 2 et 3 respectivement, conçus de façon que l'équipage puisse continuer à garder le contrôle de l'aéronef en cas de panne de l'un d'eux (voire même en cas de double panne).

Dans le mode de réalisation de la Fig. 2, le système hydraulique 101 (« système hydraulique n° 3 ») comprend :
- la paire d'accumulateurs hydrauliques 208 et 209 faisant l'objet de la surveillance (il s'agit par exemple d'accumulateurs d'azote de type piston, ou « piston-type nitrogen accumulators » en anglais) ;
- une pompe principale 203 à moteur à courant alternatif, appelée « ACMP 3A » (pour « Alternating Current Motor Pump 3A » en anglais) ;
- une pompe de réserve 204 à moteur à courant alternatif, appelée ACMP 3B » (pour « Alternating Current Motor Pump 3B » en anglais) ;
- une troisième pompe 205, appelée « pompe RAT » du fait qu'elle est reliée à une turbine de secours (ou RAT, pour « Ram Air Turbine » en anglais) ;
- un réservoir 201, contenant un fluide hydraulique sous pression et coopérant avec un accumulateur 202 réalisant plusieurs fonctions (stocker et libérer le fluide sous pression pour maintenir la pression du système hydraulique, absorber les chocs et les pulsations, et fournir une puissance auxiliaire lors des pics de demande) différentes de celle réalisée par la paire d'accumulateurs 208 et 209 surveillée par le système de surveillance 300 (à savoir fournir temporairement une puissance hydraulique dans une situation d'urgence) ;
- un collecteur de filtres à pression (ou « Pressure Filter Manifold » en anglais) 206 ;
- un actionneur d'arrimage de RAT (ou « RAT Stow Actuator » en anglais) 207 ;
- un bloc 210 d'actionneurs de gouvernes pour les commandes de vol primaires ;
- un bloc 211 d'actionneurs de gouvernes pour les commandes de vol secondaires ;
- une vanne de priorité 212 ; et
- un bloc 213 d'actionneurs pour les becs et volets (« Slats and Flaps » en anglais).

Dans ce contexte, la situation d'urgence précitée (dans laquelle la paire d'accumulateurs hydrauliques 208 et 209 fournit temporairement une puissance hydraulique) est une situation dans laquelle la pompe principale 203 (ACMP 3A) et la pompe de réserve 204 (ACMP 3B) sont non opérationnelles (par exemple du fait d'une double panne moteur) et la pompe RAT 205 n'est pas encore totalement opérationnelle.

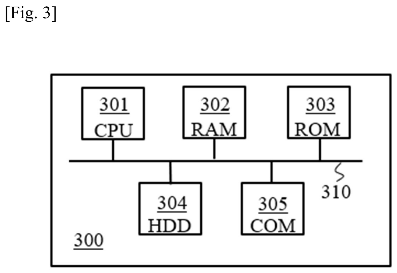

La **Fig. 3** illustre schématiquement un exemple d'architecture matérielle du système de surveillance 300 de la Fig. 1, qui comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au système de surveillance 300 d'interagir dans l'avionique de l'aéronef 100.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le système de surveillance 300 est mis sous tension, le processeur 301 est capable de lire de la RAM 302 des instructions et de les exécuter. Ces instructions forment un programme d'ordinateur causant la mise en œuvre, par le processeur 301, des comportements, étapes et algorithme décrits ici.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système de surveillance 300 comprend de la circuiterie électronique agencée et configurée pour implémenter les comportements, étapes et algorithmes décrits ici.

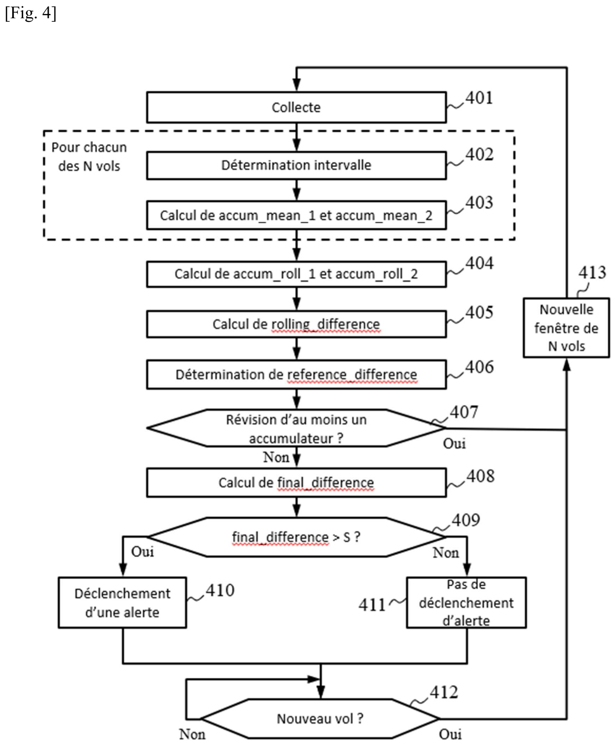

La **Fig. 4** illustre schématiquement un exemple d'algorithme de surveillance de la performance de la paire d'accumulateurs hydrauliques 208 et 209 comprise dans le système hydraulique 101 de la Fig. 2. L'algorithme (procédé) est implémenté par le système de surveillance 300 discuté ci-dessus en relation avec les Fig. 1 et 3.

Dans une étape 401, le système de surveillance 300 collecte des valeurs de pression des deux accumulateurs hydrauliques 208 et 209 pendant chacun de N vols de l'aéronef, avec N ≥ 2 (par exemple, N = 20). Les valeurs de pression sont fournies par des capteurs de pression dont est équipé l'aéronef 100.

Les deux étapes suivantes 402 et 403 sont exécutées pour chacun des N vols.

Dans l'étape 402, le système de surveillance 300 détermine un intervalle de temps particulier du vol considéré. Dans un mode de réalisation, il s'agit d'un intervalle de temps compris dans une phase finale du vol et contenant des valeurs de pression qui respectent un jeu de critères définissant un caractère constant de la pression des deux accumulateurs hydrauliques 208 et 209. Par exemple, il s'agit du dernier intervalle de temps de 10s, parmi la succession d'intervalles de temps de 10s formant les dix dernières minutes du vol, contenant des valeurs de pression qui respectent le jeu de critères suivant (comprenant trois conditions cumulatives) :
- pour chacun des accumulateurs hydrauliques 208 et 209 : 0 ≤ accum_cnt_max_j - accum_cnt_min_j ≤ S1 (par exemple, S1 = 30 psig) ; ET
- pour chacun des accumulateurs hydrauliques 208 et 209 : accum_cnt_max_j < S2, avec S2 > S1 (par exemple, S2 = 2000 psig) ; ET
- pour chacun des accumulateurs hydrauliques 208 et 209 : accum_cnt_min_j > 0 psig ;
où accum_cnt_max_j et accum_cnt_min_j sont respectivement la valeur de pression maximale et la valeur de pression minimale parmi les valeurs de pression contenues dans l'intervalle de temps considéré, avec j égal 1 pour l'accumulateur hydraulique 208 et j égal 2 pour l'accumulateur hydraulique 209.

Dans l'étape 403, pour chacun des deux accumulateurs hydrauliques 208 et 209, le système de surveillance 300 calcule une valeur moyenne de pression (notée accum_mean_j avec j égal 1 pour l'accumulateur hydraulique 208 et j égal 2 pour l'accumulateur hydraulique 209), en fonction de valeurs de pression contenues dans l'intervalle de temps déterminé à l'étape 402. Dans un mode de réalisation, la valeur moyenne de pression accum_mean_j, avec j égal 1 ou 2, calculée pour chacun des accumulateurs hydrauliques est une moyenne de la valeur de pression maximale accum_cnt_max_j et de la valeur de pression minimale accum_cnt_min_j parmi les valeurs de pression contenues dans l'intervalle de temps déterminé à l'étape 402.

Dans une étape 404, pour chacun des accumulateurs hydrauliques 208 et 209, le système de surveillance 300 calcule une moyenne (notée accum_roll_1 pour l'accumulateur hydraulique 208 et accum_roll_2 pour l'accumulateur hydraulique 209) des N valeurs moyennes de pression calculées pour les N vols (c'est-à-dire les N valeurs de accum_mean_1 pour l'accumulateur hydraulique 208 et les N valeurs de accum_mean_2 pour l'accumulateur hydraulique 209, calculées lors des N itérations de l'étape 403).

Dans une étape 405, le système de surveillance 300 calcule un paramètre noté rolling_difference, qui est la valeur absolue d'une différence entre les moyennes accum_roll_1 et accum_roll_2 calculées à l'étape 404.

Dans une étape 406, le système de surveillance 300 détermine une valeur de référence, notée reference_difference, qui est égale au paramètre rolling_difference calculé pour le premier vol qui suit une observation d'une révision d'au moins un des deux accumulateurs hydrauliques 208 et 209.

Dans une étape 407, le système de surveillance 300 détermine si une révision (c'est-à-dire une opération de maintenance) d'au moins un des accumulateurs hydrauliques 208 et 209 est observée. Dans un mode de réalisation, une révision d'un accumulateur hydraulique donné, parmi les accumulateurs hydrauliques 208 et 209, est observée si les trois conditions cumulatives suivantes sont vérifiées :
- la valeur absolue d'une différence entre une valeur moyenne de pression (notée accum_mean_j_F) pour l'accumulateur hydraulique donné pendant un vol de rang F et une valeur moyenne de pression (notée accum_mean_j_F-2) pour l'accumulateur hydraulique donné pendant un vol de rang F-2 est supérieure à un seuil prédéterminé noté low_threshold (par exemple, low_threshold = 180 psig). Cette première condition s'écrit : abs(accum_mean_j_F - accum_mean_j_F-2) > low_threshold ; ET
- la valeur absolue d'une différence entre la valeur moyenne de pression (notée accum_mean_j_F) pour l'accumulateur hydraulique donné pendant le vol de rang F et une valeur moyenne de pression (notée accum_mean_j_F-1) pour l'accumulateur hydraulique donné pendant un vol de rang F-1 est supérieure à un autre seuil prédéterminé noté high_threshold (par exemple, high_threshold = 200 psig), lui-même supérieur au seuil low_threshold. Cette deuxième condition s'écrit : abs(accum_mean_j_F - accum_mean_j_F-1) > high_threshold ; ET
- la valeur absolue d'une différence entre la valeur moyenne de pression (notée accum_mean_j_F) pour l'accumulateur hydraulique donné pendant le vol de rang F et une valeur moyenne de pression (notée accum_mean_j_F+1) pour l'accumulateur hydraulique donné pendant un vol de rang F+1 est inférieure au seuil high_threshold. Cette troisième condition s'écrit : abs(accum_mean_j_F - accum_mean_j_F+1) < high _threshold.

La troisième condition permet de vérifier que la valeur accum_mean_j_F n'est pas une valeur aberrante dont il ne faut pas tenir compte.

Si une révision (c'est-à-dire une opération de maintenance, comme indiqué plus haut dans la description de l'étape 407) d'au moins un des accumulateurs hydrauliques 208 et 209 est observée à l'étape 407, le système de surveillance 300 passe directement à l'étape 413 décrite plus bas. En d'autres termes, le système de surveillance 300 effectue une nouvelle itération des étapes 401 à 406 (avec une nouvelle fenêtre de N vols incluant le nouveau vol et les N-1 vols précédents). Ainsi, à la nouvelle itération de l'étape 406, le système de surveillance 300 détermine une valeur de référence qui va être différente de la valeur précédente puisqu'elle est égale au paramètre rolling_difference calculé pour le premier vol qui suit une observation d'une révision d'au moins un des deux accumulateurs hydrauliques 208 et 209.

Si aucune révision des accumulateurs hydrauliques 208 et 209 n'est observée à l'étape 407, le système de surveillance 300 passe à l'étape 408 dans laquelle il calcule un indicateur de fuite, noté final_difference, qui est fonction d'une différence entre le paramètre rolling_difference et la valeur de référence reference_difference. Dans un mode de réalisation, on a : final_difference = rolling_difference - reference_difference.

Après l'étape 408, le système de surveillance 300 passe à l'étape 409 dans laquelle il détermine si l'indicateur de fuite final_difference est supérieur à un seuil prédéterminé S (par exemple, S = 35 psig).

Si l'indicateur de fuite final_difference est inférieur ou égal au seuil S (réponse « non » au test de l'étape 409), le système de surveillance 300 passe à l'étape 411 dans laquelle il ne déclenche pas d'alerte.

Si l'indicateur de fuite final_difference est supérieur au seuil S (réponse « oui » au test de l'étape 409), le système de surveillance 300 passe à l'étape 410 dans laquelle il déclenche une alerte. Dans un mode de réalisation, le déclenchement d'une alerte à l'étape 410 comprend :
- déclencher une première alerte indiquant une fuite de l'accumulateur hydraulique 208 si l'indicateur de fuite final_difference est supérieur au seuil S et si la moyenne accum_roll_1 calculée pour l'accumulateur hydraulique 208 est inférieure à la moyenne accum_roll_2 calculée pour l'accumulateur hydraulique 209 ; et
- déclencher une deuxième alerte indiquant une fuite de l'accumulateur hydraulique 209 si l'indicateur de fuite final_difference est supérieur au seuil S et si la moyenne accum_roll_1 calculée pour l'accumulateur hydraulique 208 est supérieure à la moyenne accum_roll_2 calculée pour l'accumulateur hydraulique 209.

A l'issue de l'étape 410 ou de l'étape 411 (selon le résultat du test de l'étape 409), le système de surveillance 300 passe à l'étape 412 dans laquelle il détermine si un nouveau vol est à traiter.

Tant qu'il n'y a pas de nouveau vol à traiter (réponse « non » au test de l'étape 412), le système de surveillance 300 reboucle sur l'étape 412. Si un nouveau vol est à traiter (réponse « oui » au test de l'étape 412), le système de surveillance 300 passe à l'étape 413, dans laquelle il détermine une nouvelle fenêtre de N vols incluant le nouveau vol et les N-1 vols précédents (en d'autres termes, on utilise une fenêtre glissante de N vols), puis il revient à l'étape 401 pour une nouvelle itération des différentes étapes du procédé.

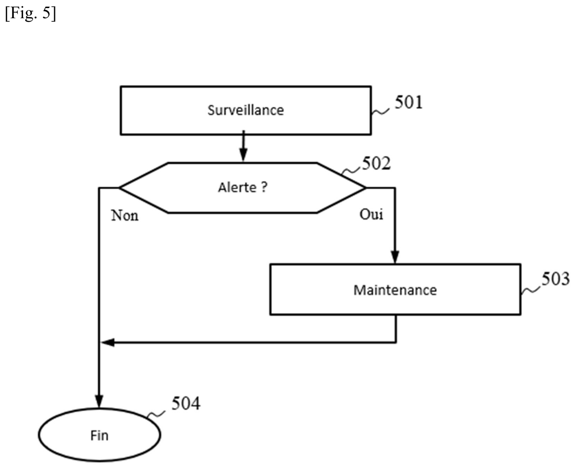

La Fig. 5 illustre schématiquement un exemple d'algorithme de maintenance de la paire d'accumulateurs hydrauliques 208 et 209 comprise dans le système hydraulique 101 de la Fig. 2.

Dans une étape 501, le système de surveillance 300 exécute l'algorithme de surveillance de la performance de la paire d'accumulateurs hydrauliques, par exemple dans le mode de réalisation particulier décrit plus haut (voir la description de la Fig. 4).

Si une alerte a été déclenchée à l'issue de l'étape 501 (résultat « oui » à l'étape de test 502), au moins une opération de maintenance, sur au moins un accumulateur de la paire d'accumulateurs hydrauliques, est réalisée (étape 503). Sinon (résultat « non » à l'étape de test 502), c'est directement l'étape de fin 504.

## Revendications

1. Procédé de surveillance d'une performance d'une paire d'accumulateurs hydrauliques (208, 209) comprise dans un système hydraulique (101) d'un aéronef (100), la paire d'accumulateurs hydrauliques comprenant des premier et deuxième accumulateurs hydrauliques configurés pour fournir temporairement une puissance hydraulique dans une situation d'urgence, le procédé étant implémenté par un système de surveillance (300) comprenant une circuiterie électronique, le procédé comportant :
- collecter (401) des valeurs de pression des premier et deuxième accumulateurs hydrauliques pendant chacun de N vols de l'aéronef, avec N ≥ 2, les valeurs de pression étant fournies par des capteurs de pression dont est équipé l'aéronef ;
- pour chacun des N vols, calculer (403) une valeur moyenne de pression (accum_mean_j) pour chacun des premier et deuxième accumulateurs hydrauliques, en fonction de valeurs de pression contenues dans un intervalle de temps déterminé du vol ;
- pour chacun des premier et deuxième accumulateurs hydrauliques, calculer (404) une moyenne, notée M1 (accum_roll_1) pour le premier accumulateur hydraulique et M2 (accum_roll_2) pour le deuxième accumulateur hydraulique, des N valeurs moyennes de pression calculées pour les N vols ;
- calculer (405) un paramètre P (rolling_difference) qui est la valeur absolue d'une différence entre les moyennes M1 et M2 calculées pour les premier et deuxième accumulateurs hydrauliques ;
- calculer (408) un indicateur de fuite (final_difference) qui est fonction d'une différence entre le paramètre P (rolling_difference) et une valeur de référence déterminée (reference_difference) ; et
- déclencher (410) une alerte si l'indicateur de fuite est supérieur à un premier seuil prédéterminé (S), et ne pas déclencher (411) une alerte si l'indicateur de fuite est inférieur ou égal au premier seuil prédéterminé.

2. Procédé de surveillance selon la revendication 1, comprenant, pour chacun des N vols : déterminer (402) l'intervalle de temps comme étant compris dans une phase finale du vol et comme contenant des valeurs de pression qui respectent un jeu de critères définissant un caractère constant de la pression des premier et deuxième accumulateurs hydrauliques.

3. Procédé de surveillance selon l'une quelconque des revendications 1 et 2, dans lequel, pour chacun des N vols, la valeur moyenne de pression (accum _mean_j) calculée (403) pour chacun des premier et deuxième accumulateurs hydrauliques est une moyenne d'une valeur de pression maximale et d'une valeur de pression minimale parmi les valeurs de pression contenues dans l'intervalle de temps déterminé du vol.

4. Procédé de surveillance selon l'une quelconque des revendications 1 à 3, dans lequel la valeur de référence (reference_difference) est déterminée (406) comme le paramètre P calculé pour le premier vol qui suit une observation d'une révision d'au moins un des premier et deuxième accumulateurs hydrauliques.

5. Procédé de surveillance selon la revendication 4, dans lequel une révision d'un accumulateur hydraulique donné, parmi les premier et deuxième accumulateurs hydrauliques, est observée (407) si les trois conditions suivantes sont vérifiées :
- la valeur absolue d'une différence entre une valeur moyenne de pression pour l'accumulateur hydraulique donné pendant un vol de rang F et une valeur moyenne de pression pour l'accumulateur hydraulique donné pendant un vol de rang F-2 est supérieure à un deuxième seuil prédéterminé ;
- la valeur absolue d'une différence entre la valeur moyenne de pression pour l'accumulateur hydraulique donné pendant le vol de rang F et une valeur moyenne de pression pour l'accumulateur hydraulique donné pendant un vol de rang F-1 est supérieure à un troisième seuil prédéterminé lui-même supérieur au deuxième seuil prédéterminé ; et
- la valeur absolue d'une différence entre la valeur moyenne de pression pour l'accumulateur hydraulique donné pendant le vol de rang F et une valeur moyenne de pression pour l'accumulateur hydraulique donné pendant un vol de rang F+1 est inférieure au troisième seuil prédéterminé.

6. Procédé de surveillance selon l'une quelconque des revendications 1 à 5, dans lequel le déclenchement (410) d'une alerte comprend :
- déclencher une première alerte indiquant une fuite du premier accumulateur hydraulique si l'indicateur de fuite est supérieur au premier seuil prédéterminé et si la moyenne M1 calculée pour le premier accumulateur hydraulique est inférieure à la moyenne M2 calculée pour le deuxième accumulateur hydraulique ; et
- déclencher une deuxième alerte indiquant une fuite du deuxième accumulateur hydraulique si l'indicateur de fuite est supérieur au premier seuil prédéterminé et si la moyenne M1 calculée pour le premier accumulateur hydraulique est supérieure à la moyenne M2 calculée pour le deuxième accumulateur hydraulique.

7. Procédé de surveillance selon l'une quelconque des revendications 1 à 6, dans lequel au moins deux itérations de la collecte, des calculs et du déclenchement ou du non-déclenchement d'une alerte sont effectuées, chaque itération étant effectuée en utilisant (413) une composition particulière d'une fenêtre glissante de N vols.

8. Procédé de surveillance selon l'une quelconque des revendications 1 à 7, dans lequel le système hydraulique (101) comprend une pompe principale (203, ACMP 3A), une pompe de réserve (204, ACMP 3B) et une troisième pompe (205) reliée à une turbine de secours, et dans lequel la situation d'urgence est une situation dans laquelle la pompe principale et la pompe de réserve sont non opérationnelles et la troisième pompe reliée à la turbine de secours n'est pas encore totalement opérationnelle.

9. Produit programme d'ordinateur, comportant des instructions entraînant l'exécution, par un processeur (301), du procédé de surveillance selon l'une quelconque des revendications 1 à 8, lorsque lesdites instructions sont exécutées par le processeur.

10. Support de stockage (303), stockant un programme d'ordinateur comportant des instructions entraînant l'exécution, par un processeur (301), du procédé de surveillance selon l'une quelconque des revendications 1 à 8, lorsque lesdites instructions sont lues et exécutées par le processeur.

11. Système de surveillance (300) d'une performance d'une paire d'accumulateurs hydrauliques (208, 209) comprise dans un système hydraulique (101) d'un aéronef (100), la paire d'accumulateurs hydrauliques comprenant des premier et deuxième accumulateurs hydrauliques configurés pour fournir temporairement une puissance hydraulique dans une situation d'urgence, le système de surveillance comprenant une circuiterie électronique configurée pour implémenter :
- collecter des valeurs de pression des premier et deuxième accumulateurs hydrauliques pendant chacun de N vols de l'aéronef, avec N ≥ 2, les valeurs de pression étant fournies par des capteurs de pression dont est équipé l'aéronef ;
- pour chacun des N vols, calculer une valeur moyenne de pression (accum_mean) pour chacun des premier et deuxième accumulateurs hydrauliques, en fonction de valeurs de pression contenues dans un intervalle de temps déterminé du vol ;
- pour chacun des premier et deuxième accumulateurs hydrauliques, calculer une moyenne, notée M1 (accum_roll_1) pour le premier accumulateur hydraulique et M2 (accum_roll_2) pour le deuxième accumulateur hydraulique, des N valeurs moyennes de pression calculées pour les N vols ;
- calculer un paramètre P (rolling_difference) qui est la valeur absolue d'une différence entre les moyennes M1 et M2 calculées pour les premier et deuxième accumulateurs hydrauliques ;
- calculer un indicateur de fuite (final_difference) qui est fonction d'une différence entre le paramètre P (rolling_difference) et une valeur de référence déterminée (reference_difference) ; et
- déclencher une alerte si l'indicateur de fuite est supérieur à un premier seuil prédéterminé (S), et ne pas déclencher une alerte si l'indicateur de fuite est inférieur ou égal au premier seuil prédéterminé.

12. Procédé de maintenance d'une paire d'accumulateurs hydrauliques (208, 209) comprise dans un système hydraulique (101) d'un aéronef (100), la paire d'accumulateurs hydrauliques comprenant des premier et deuxième accumulateurs hydrauliques configurés pour fournir temporairement une puissance hydraulique dans une situation d'urgence, le procédé de maintenance comportant :
- exécuter (501) le procédé de surveillance selon l'une quelconque des revendications 1 à 8, pour surveiller la performance de la paire d'accumulateurs hydrauliques ; et
- en cas de déclenchement (502) d'une alerte relative à la performance de la paire d'accumulateurs hydrauliques, réaliser (503) au moins une opération de maintenance sur au moins un des accumulateurs hydrauliques de la paire d'accumulateurs hydrauliques.
